# EUROPEAN PATENT APPLICATION

(11) **EP 4 439 529 A1**
(43) Date of publication of application: **02.10.2024**
(21) Application number: 22918866.9
(22) Date of filing: 26.12.2022
(51) Int. Cl.: G09B 9/12, G09B 9/14

(54) **OSCILLATING APPARATUS AND CONTROL METHOD FOR OSCILLATING APPARATUS**

(30) Priority: 06.01.2022 JP 2022001244
(71) Applicant: Mitsubishi Heavy Industries Machinery Systems, Ltd., Kobe-shi, Hyogo 652-8585 (JP)
(72) Inventor: OKAMOTO, Takumi, Kobe-shi, Hyogo 652-8585 (JP); SUZUKI, Kanta, Kobe-shi, Hyogo 652-8585 (JP)
(74) Representative: Hoffmann Eitle
(86) International application number: PCT/JP2022/047845
(87) International publication number: WO 2023/132282

(57) **Abstract**

Provided are an oscillating apparatus and a control method for an oscillating apparatus, wherein in the oscillating apparatus in which a plurality of expansion/contraction devices are disposed between a first member and a second member that are disposed to face each other, each expansion/contraction device comprises a first expansion/contraction part that is expandable and contractible between the first member and the second member, a second expansion/contraction part that is expandable and contractible between the first member and the second member, and a common driving source that supplies power to the first expansion/contraction part and the second expansion/contraction part.

## Description

### Technical Field

The present disclosure relates to an oscillation device such as a Stewart platform applied to a driving simulator or a flight simulator, and a method for controlling the oscillation device.

### Background Art

A Stewart platform applied to a driving simulator or the like is configured by installing six actuators between a lower support plate and an upper support plate. The Stewart platform controls an angle of the upper support plate with respect to the lower support plate by operating the six actuators. As such a technique, for example, there is one described in the following patent literature.

### Citation List

### Patent Literature

[PTL 1] UK Patent Application Publication No. 2328192
[PTL 2] International Publication No. WO2016/172029

### Summary of Invention

### Technical Problem

In the Stewart platform, an upper support plate is supported by a lower support plate by six actuators. Therefore, for example, when an operation abnormality occurs in one actuator among six actuators, it becomes difficult to control the upper support plate to an appropriate angle. In the above-mentioned patent literature, the number of actuators is increased or a plurality of driving sources are provided for one actuator. However, in such a configuration, there is a problem in that an increase in the number of driving sources causes the device to be increased in size or to be increased in cost.

The present disclosure has been made to solve the problems described above, and an object of the present disclosure is to provide an oscillation device and a method for controlling an oscillation device capable of suppressing an increase in size and an increase in cost and improving safety.

### Solution to Problem

An oscillation device of the present disclosure for achieving the above object is an oscillation device in which a plurality of expansion and contraction devices disposed between a first member and a second member disposed to face each other, in which the expansion and contraction device includes a first expansion and contraction portion that is capable of expanding and contracting between the first member and the second member, a second expansion and contraction portion that is capable of expanding and contracting between the first member and the second member, and a common driving source that supplies power to the first expansion and contraction portion and the second expansion and contraction portion.

A control method for an oscillation device according to the present disclosure is a control method for an oscillation device in which a plurality of expansion and contraction devices are disposed between a first member and a second member disposed to face each other, the expansion and contraction device includes a first expansion and contraction portion that is capable of expanding and contracting between the first member and the second member, a second expansion and contraction portion that is capable of expanding and contracting between the first member and the second member, and a common driving source that supplies power to the first expansion and contraction portion and the second expansion and contraction portion, the method includes, when an operation abnormality occurs in any one of the first expansion and contraction portion and the second expansion and contraction portion, controlling an amount of expansion and contraction of the other of the first expansion and contraction portion and the second expansion and contraction portion by the driving source. Advantageous Effects of Invention

According to an oscillation device and a control method of the oscillation device of the present disclosure, it is possible to suppress an increase in size and an increase in cost and to improve safety.

### Brief Description of Drawings

Fig. 1 is a perspective view showing an overall configuration of an oscillation device according to a first embodiment.
Fig. 2 is a schematic view showing the expansion and contraction device in the oscillation device.
Fig. 3 is a cross-sectional view showing a modification example of the expansion and contraction device.
Fig. 4 is a schematic view showing the expansion and contraction device in the oscillation device of a second embodiment.
Fig. 5 is a schematic view showing the expansion and contraction device in the oscillation device of a third embodiment.
Fig. 6 is a front view showing a main part of the expansion and contraction device in the oscillation device of a fourth embodiment.
Fig. 7 is a plan view showing a main part of the expansion and contraction device.

### Description of Embodiments

Hereinafter, a preferred embodiment of the present disclosure will be described in detail with reference to the drawings. The present disclosure is not limited to the embodiment. In addition, in a case where there are a plurality of embodiments, the present disclosure also includes configurations obtained by combining each embodiment. In addition, constituents in the embodiment include constituents that are easily perceivable by those skilled in the art, constituents that are substantially the same, and constituents within a so-called range of equivalents.

### [First Embodiment]

### <Oscillation Device>

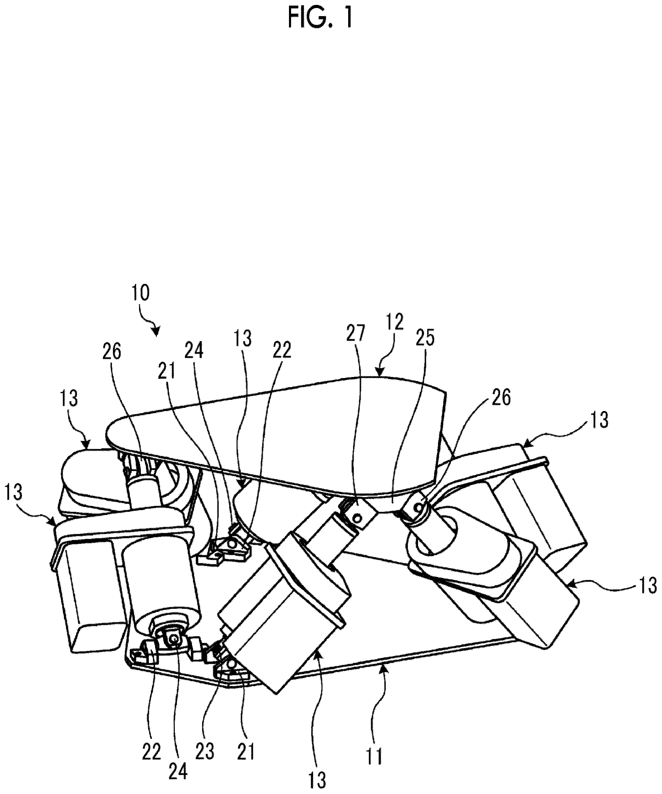

Fig. 1 is a perspective view showing an overall configuration of an oscillation device according to a first embodiment.

In the first embodiment, as shown in Fig. 1, the oscillation device 10 is configured to have a plurality of expansion and contraction devices 13 disposed between the first member 11 and the second member 12 disposed to face each other. The oscillation device 10 is, for example, a Stewart platform, and has six expansion and contraction devices 13. However, the oscillation device 10 is not limited to the Stewart platform, and the number of the expansion and contraction devices 13 may be five or less or may be seven or more. The oscillation device 10 is applied to, for example, a simulator device such as a driving simulator or a flight simulator, a robot hand, or the like, but is not limited thereto.

For example, six expansion and contraction devices 13 are configured into three sets, each set including two expansion and contraction devices 13 as one set. One set of two expansion and contraction device 13 is disposed in a chevron shape. In one set of the expansion and contraction devices 13, each of the base end portions is connected to the different connection portions 21 and 22 of the first member 11 via universal joints 23 and 24. In addition, in one set of the expansion and contraction devices 13, each of the tip portions is connected to the connection portion 25 common to the second members 12 via universal joints 26 and 27. In one set of the expansion and contraction devices 13, the base end portion is connected to the vicinity of the base end portion of the other adjacent one set of two expansion and contraction devices 13. The six expansion and contraction devices 13 have the same configuration. In addition, in one set of the expansion and contraction devices 13, each of the base end portions may be connected to a common connection portion, or each of the tip portions may be connected to different connection portions 25.

The oscillation device 10 can change and adjust the angle of the second member 12 with respect to the first member 11 by controlling an amount of expansion and contraction of the plurality of expansion and contraction devices 13. At this time, at least the amount of expansion and contraction in one set of the two expansion and contraction devices 13 is controlled in synchronization with each other.

### <Configuration of Expansion and Contraction Device>

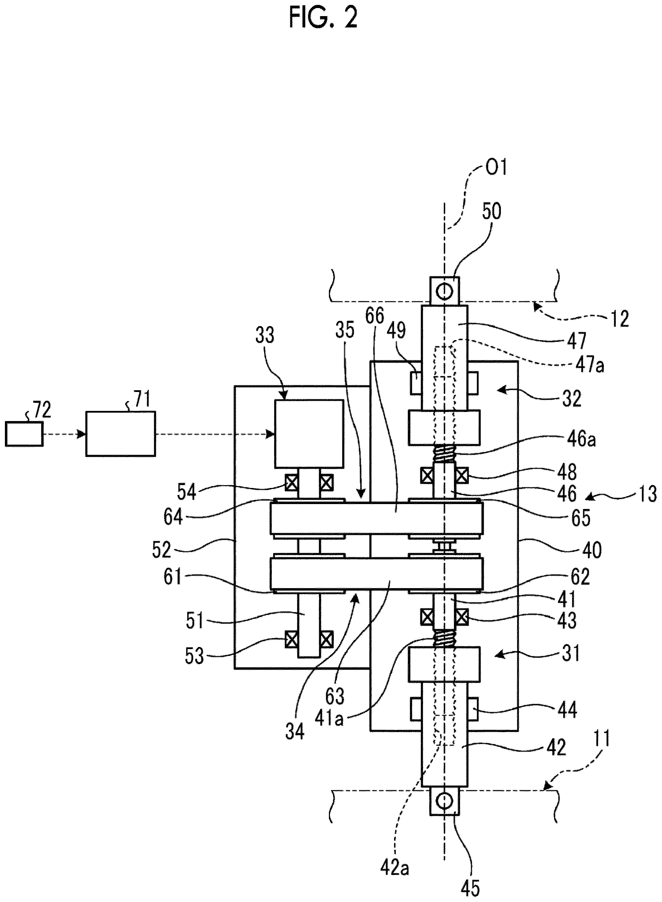

Fig. 2 is a schematic view showing the expansion and contraction device in the oscillation device.

As shown in Fig. 2, the expansion and contraction device 13 includes a first expansion and contraction portion 31, a second expansion and contraction portion 32, a driving source 33, a first power transmission system 34, and a second power transmission system 35.

The first expansion and contraction portion 31 and the second expansion and contraction portion 32 are capable of expanding and contracting between the first member 11 and the second member 12. The first expansion and contraction portion 31 and the second expansion and contraction portion 32 are disposed in a series state between the first member 11 and the second member 12. The first expansion and contraction portion 31 and the second expansion and contraction portion 32 are accommodated in the first housing 40.

The first expansion and contraction portion 31 has a first screw shaft 41 and a first moving body 42. A screw portion 41a is formed in a tip portion of the first screw shaft 41. A screw hole 42a penetrating the base end portion is formed in the first moving body 42. The first expansion and contraction portion 31 is configured such that the screw portion 41a of the first screw shaft 41 is screwed into the screw hole 42a of the first moving body 42.

The first screw shaft 41 is rotatable in the circumferential direction by the bearing 43 with respect to the first housing 40 and is supported to be immovable in the axial direction. The first moving body 42 is movable in the axial direction by the guide member 44 and is supported not to be rotatable in the circumferential direction. A part of the first expansion and contraction portion 31 on the tip portion side of the first moving body 42 protrudes from the first housing 40. The first moving body 42 is provided with a connection portion 45 at a tip portion, and the connection portion 45 is connected to the first member 11 via universal joints 23 and 24 (refer to Fig. 1).

The second expansion and contraction portion 32 has a second screw shaft 46 and a second moving body 47. The screw portion 46a is formed in a tip portion of the second screw shaft 46. The screw hole 47a penetrating the base end portion is formed in the second moving body 47. The second expansion and contraction portion 32 is configured such that the screw portion 46a of the second screw shaft 46 is screwed into the screw hole 47a of the second moving body 47.

The second screw shaft 46 is rotatable in the circumferential direction by the bearing 48 with respect to the first housing 40 and is supported to be immovable in the axial direction. The second moving body 47 is movable in the axial direction by the guide member 49 and is supported not to be rotatable in the circumferential direction. A part of the second expansion and contraction portion 32 on the tip portion side of the second moving body 47 protrudes from the first housing 40. The second moving body 47 is provided with a connection portion 50 at a tip portion, and the connection portion 50 is connected to the second member 12 via universal joints 26 and 27 (refer to Fig. 1).

The first expansion and contraction portion 31 and the second expansion and contraction portion 32 are disposed along a center O1 at which the centers of the first screw shaft 41 and the second screw shaft 46 are common.

Therefore, in the first expansion and contraction portion 31, when the first screw shaft 41 is rotated in the normal direction, power is transmitted to the first moving body 42 via the screw portion 41a and the screw hole 42a that are screwed to each other, and the first moving body 42 moves to one side in the axial direction and is separated from the first screw shaft 41. On the other hand, in the first expansion and contraction portion 31, when the first screw shaft 41 is rotated in the reverse direction, power is transmitted to the first moving body 42 via the screw portion 41a and the screw hole 42a that are screwed to each other, and the first moving body 42 moves in the other side in the axial direction and approaches the first screw shaft 41.

In the second expansion and contraction portion 32, when the second screw shaft 46 is rotated in the normal direction, power is transmitted to the second moving body 47 via the screw portion 46a and the screw hole 47a that are screwed to each other, and the second moving body 47 moves to one side in the axial direction and is separated from the second screw shaft 46. On the other hand, in the second expansion and contraction portion 32, when the second screw shaft 46 is rotated in the reverse direction, power is transmitted to the second moving body 47 via the screw portion 46a and the screw hole 47a that are screwed with each other, and the second moving body 47 moves to the other side in the axial direction and approaches the second screw shaft 46.

The driving source 33 is, for example, an electric or hydraulic motor. The driving source 33 has a rotary shaft 51 as an output shaft. The driving source 33 is accommodated in and fixed to the second housing 52. The second housing 52 is fixed to the first housing 40. The rotary shaft 51 is rotatably supported by the bearing 53 and 54 in the circumferential direction with respect to the second housing 52. The driving source 33 can rotate the rotary shaft 51 in a normal direction and a reverse direction. The driving source 33 functions as a common driving source that supplies power to the first expansion and contraction portion 31 and the second expansion and contraction portion 32.

The first power transmission system 34 has a drive pulley 61, a driven pulley 62, and a drive belt 63. The drive pulley 61 is fixed to the rotary shaft 51 of the driving source 33. The driven pulley 62 is fixed to the first screw shaft 41 in the first expansion and contraction portion 31. The drive belt 63 is an endless belt and is wound between the drive pulley 61 and the driven pulley 62. The first power transmission system 34 is capable of rotating the first screw shaft 41 by transmitting the power of the driving source 33 between the driving source 33 and the first screw shaft 41.

The second power transmission system 35 has a drive pulley 64, a driven pulley 65, and a drive belt 66. The drive pulley 64 is fixed to the rotary shaft 51 of the driving source 33. The driven pulley 65 is fixed to the second screw shaft 46 in the second expansion and contraction portion 32. The drive belt 66 is an endless belt and is wound between the drive pulley 64 and the driven pulley 65. The second power transmission system 35 is capable of rotating the second screw shaft 46 by transmitting the power of the driving source 33 between the driving source 33 and the second screw shaft 46.

Therefore, when the driving source 33 is driven and the rotary shaft 51 is rotated in the normal direction, power is transmitted to the first screw shaft 41 via the drive pulley 61, the drive belt 63, and the driven pulley 62 that configure the first power transmission system 34, and the first screw shaft 41 is rotated in the normal direction. In addition, the power of the driving source 33 is transmitted to the second screw shaft 46 via the drive pulley 64, the drive belt 66, and the driven pulley 65 that configure the second power transmission system 35, and the second screw shaft 46 is rotated in the normal direction.

On the other hand, when the driving source 33 is driven and the rotary shaft 51 is rotated in the reverse direction, power is transmitted to the first screw shaft 41 via the drive pulley 61, the drive belt 63, and the driven pulley 62 that configure the first power transmission system 34, and the first screw shaft 41 is rotated in the reverse direction. In addition, the power of the driving source 33 is transmitted to the second screw shaft 46 via the drive pulley 64, the drive belt 66, and the driven pulley 65 that configure the second power transmission system 35, and the second screw shaft 46 is rotated in the reverse direction.

In addition, the oscillation device 10 (refer to Fig. 1) includes a control unit 71. The control unit 71 can control each expansion and contraction device 13 via the driving source 33. That is, the control unit 71 controls the expansion and contraction direction and the amount of expansion and contraction of each expansion and contraction device 13 by adjusting the rotation direction, the rotation speed, the rotation amount, and the like of the driving source 33. The control unit 71 controls the driving source 33 according to the input command value or the various stored programs. The control unit 71 is a controller, is configured to include, for example, a central processing unit (CPU), a micro processing unit (MPU), or the like, and executes various programs.

Each of the expansion and contraction devices 13 is provided with an operation abnormality detection unit 72 that detects an operation abnormality such as the first expansion and contraction portion 31 or the second expansion and contraction portion 32. The operation abnormality detection unit 72 detects a failure of the first expansion and contraction portion 31 and the second expansion and contraction portion 32, a failure of the first power transmission system 34 and the second power transmission system 35, a failure of each brake device (not shown) provided in the first expansion and contraction portion 31 and the second expansion and contraction portion 32, and the like. The operation abnormality detection unit 72 is, for example, a rotation sensor that detects the rotation amount of the first screw shaft 41 or the second screw shaft 46, a stroke sensor that detects the moving amount of the first moving body 42 or the second moving body 47, a rotation sensor that detects the rotation amount of the drive pulleys 61 and 64 or the driven pulleys 62 and 65, or an acceleration sensor that detects the moving speed of the drive belts 63 and 66, but is not limited to these sensors.

The control unit 71 controls the driving source 33 based on a detection result of the operation abnormality detection unit 72. When the operation abnormality detection unit 72 detects the operation abnormality in any one of the first expansion and contraction portion 31 and the second expansion and contraction portion 32, the control unit 71 controls the amount of expansion and contraction of the other of the first expansion and contraction portion 31 and the second expansion and contraction portion 32 by the driving source 33.

### <Operation of Expansion and Contraction Device>

When the angle of the second member 12 with respect to the first member 11 is changed, the control unit 71 operates each of the expansion and contraction devices 13. The control unit 71 drives the driving source 33 to rotate the rotary shaft 51 in the normal direction. The power of the driving source 33 is transmitted to the first expansion and contraction portion 31 via the first power transmission system 34, and the first screw shaft 41 is rotated in the normal direction. When the first screw shaft 41 is rotated in the normal direction, a rotational force is transmitted to the first moving body 42 as an axial movement force via the screw portion 41a and the screw hole 42a, and the first moving body 42 is separated from the first screw shaft 41. In addition, the power of the driving source 33 is transmitted to the second screw shaft 46 of the second expansion and contraction portion 32 via the second power transmission system 35, and the second screw shaft 46 is rotated in the normal direction. When the second screw shaft 46 is rotated in the normal direction, a rotational force is transmitted to the second moving body 47 as an axial movement force via the screw portion 46a and the screw hole 47a, and the second moving body 47 is separated from the second screw shaft 46.

As a result, the expansion and contraction device 13 can change the angle of the second member 12 with respect to the first member 11 by expanding the first moving body 42 and the second moving body 47 outward in the axial direction with respect to the first housing 40 and the second housing 52.

On the other hand, when the control unit 71 drives the driving source 33 to rotate the rotary shaft 51 in the reverse direction, the power of the driving source 33 is transmitted to the first expansion and contraction portion 31 via the first power transmission system 34, and the first screw shaft 41 is rotated in the reverse direction. When the first screw shaft 41 is rotated in the reverse direction, a rotational force is transmitted to the first moving body 42 as an axial movement force via the screw portion 41a and the screw hole 42a, and the first moving body 42 approaches the first screw shaft 41. In addition, the power of the driving source 33 is transmitted to the second screw shaft 46 of the second expansion and contraction portion 32 via the second power transmission system 35, and the second screw shaft 46 is rotated in the reverse direction. When the second screw shaft 46 is rotated in the reverse direction, a rotational force is transmitted to the second moving body 47 as an axial movement force via the screw portion 46a and the screw hole 47a, and the second moving body 47 approaches the second screw shaft 46.

As a result, the first moving body 42 and the second moving body 47 can be contracted inward in the axial direction with respect to the first housing 40 and the second housing 52 and the angle of the second member 12 with respect to the first member 11 can be changed, as the expansion and contraction device 13.

Then, for example, when the operation abnormality detection unit 72 of the expansion and contraction device 13 detects the operation abnormality of the first expansion and contraction portion 31, the operation abnormality detection unit 72 outputs to the control unit 71 that the first expansion and contraction portion 31 is in operation abnormality. The control unit 71 controls the driving source 33 in accordance with the operation abnormality of the first expansion and contraction portion 31 detected by the operation abnormality detection unit 72, and controls the amount of expansion of the second expansion and contraction portion 32.

For example, when it is necessary to expand the expansion and contraction device 13 (first expansion and contraction portion 31 and second expansion and contraction portion 32) only by 10 strokes, it is necessary to drive the driving source 33, to expand the first expansion and contraction portion 31 by 5 strokes, and to expand the second expansion and contraction portion 32 by 5 strokes. At this time, the driving source 33 cannot expand the first expansion and contraction portion 31 by only 5 strokes due to the operation abnormality. Therefore, the control unit 71 expands the second expansion and contraction portion 32 by in a range of 6 strokes to 10 strokes by the driving source 33. In this case, the maximum purpose is to prevent the second member 12 from falling due to the operation abnormality of the first expansion and contraction portion 31. That is, it is preferable that the operation of the second expansion and contraction portion 32 can compensate for the operation abnormality of the first expansion and contraction portion 31. Therefore, the control unit 71 controls the driving source 33 to increase the amount of expansion of the second expansion and contraction portion 32 within a range in which the falling of the second member 12 can be prevented.

The same applies when the expansion and contraction device 13 (first expansion and contraction portion 31 and second expansion and contraction portion 32) is contracted by a predetermined stroke.

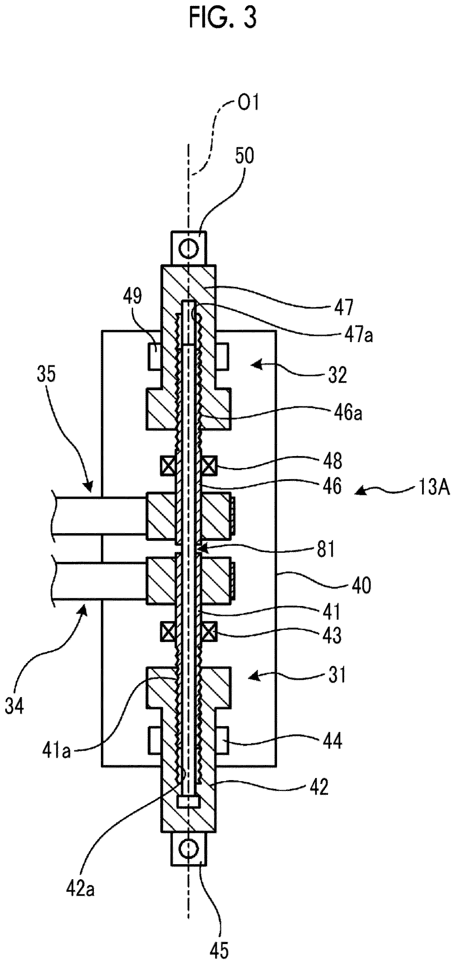

The configuration of the expansion and contraction device 13 is not limited to the above-described configuration. Fig. 3 is a cross-sectional view showing a modification example of the expansion and contraction device.

In the modification example of the first embodiment, as shown in Fig. 3, the expansion and contraction device 13A includes a first expansion and contraction portion 31, a second expansion and contraction portion 32, a driving source 33 (refer to Fig. 2), a first power transmission system 34, and a second power transmission system 35. The driving source 33, the first power transmission system 34, and the second power transmission system 35 are the same as those in the first embodiment.

The first expansion and contraction portion 31 and the second expansion and contraction portion 32 are capable of expanding and contracting between the first member 11 and the second member 12. The first expansion and contraction portion 31 and the second expansion and contraction portion 32 are disposed in a series state between the first member 11 and the second member 12.

The first expansion and contraction portion 31 has a first screw shaft 41 and a first moving body 42. The second expansion and contraction portion 32 has a second screw shaft 46 and a second moving body 47. The first expansion and contraction portion 31 and the second expansion and contraction portion 32 are disposed along a center O1 at which the centers of the first screw shaft 41 and the second screw shaft 46 are common. Then, the first screw shaft 41 and the second screw shaft 46 are disposed with a common guide shaft 81.

The first screw shaft 41 has a cylindrical shape, and a through-hole along the axial direction is formed in the first screw shaft 41. The second screw shaft 46 has a cylindrical shape, and a through-hole along the axial direction is formed in the second screw shaft 46. The guide shaft 81 is inserted into the through-hole of the first screw shaft 41 and the through-hole of the second screw shaft 46. In addition, each of axial end portions of the guide shaft 81 is inserted into the first moving body 42 and the second moving body 47, and the connection portion 82 is connected to the first moving body 42. The connection portion 82 of the guide shaft 81 may be connected to the second moving body 47, and the connection portion 82 may be connected to the first screw shaft 41 or the second screw shaft 46.

The first expansion and contraction portion 31 and the second expansion and contraction portion 32 are supported to be movable in the axial direction by at least the first screw shaft 41 and the second screw shaft 46 by a common guide shaft 81. Therefore, for example, even when an operation abnormality occurs in the first expansion and contraction portion 31, the first screw shaft 41 or the like is not broken, and the second expansion and contraction portion 32, which is not an operation abnormality, operates smoothly, so that the falling of the second member 12 can be appropriately prevented.

### [Second Embodiment]

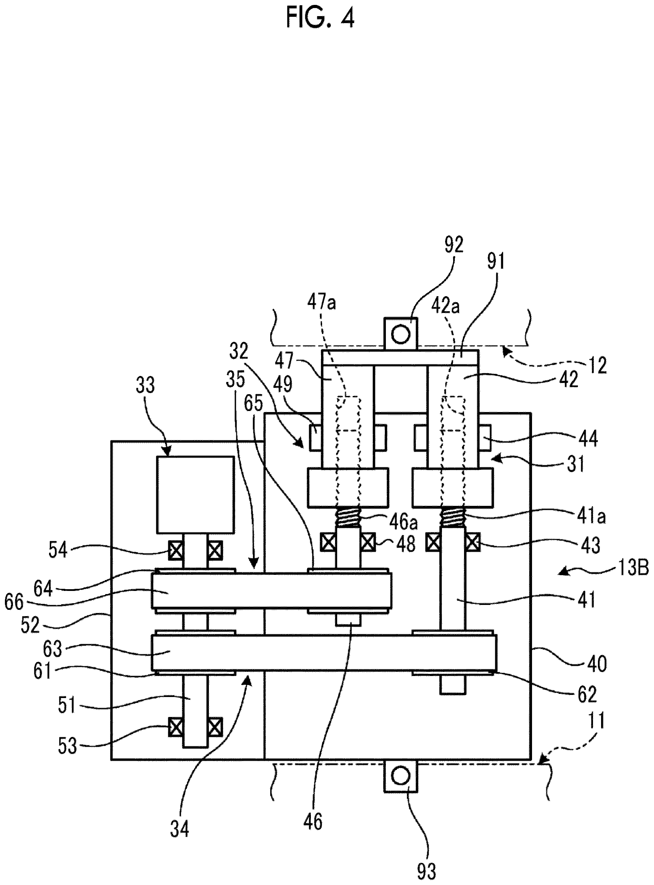

Fig. 4 is a schematic view showing an expansion and contraction device in the oscillation device of a second embodiment. The same reference numerals are assigned to the members having the same functions as the members in the first embodiment described above, and the detailed description thereof will be omitted.

In the second embodiment, as shown in Fig. 4, the expansion and contraction device 13B includes a first expansion and contraction portion 31, a second expansion and contraction portion 32, a driving source 33, a first power transmission system 34, and a second power transmission system 35. The driving source 33, the first power transmission system 34, and the second power transmission system 35 are the same as those in the first embodiment.

The first expansion and contraction portion 31 and the second expansion and contraction portion 32 are capable of expanding and contracting between the first member 11 and the second member 12. The first expansion and contraction portion 31 and the second expansion and contraction portion 32 are disposed in a parallel state between the first member 11 and the second member 12. The first expansion and contraction portion 31 and the second expansion and contraction portion 32 are accommodated in the first housing 40.

The first expansion and contraction portion 31 has a first screw shaft 41 and a first moving body 42. The second expansion and contraction portion 32 has a second screw shaft 46 and a second moving body 47. The first expansion and contraction portion 31 and the second expansion and contraction portion 32 are substantially the same as those in the first embodiment. However, the reduction ratio between the screw portion 41a of the first screw shaft 41 constituting the first expansion and contraction portion 31 and the screw hole 42a of the first moving body 42 and the reduction ratio between the screw portion 46a of the second screw shaft 46 constituting the second expansion and contraction portion 32 and the screw hole 47a of the second moving body 47 are the same.

The first expansion and contraction portion 31 and the second expansion and contraction portion 32 are disposed side by side. A part of each of the first moving body 42 and the second moving body 47 on the tip portion side protrudes from the first housing 40 in the first expansion and contraction portion 31 and the second expansion and contraction portion 32. The connecting member 91 is connected to each tip portion of the first moving body 42 and the second moving body 47, the connecting member 91 is provided with a connection portion 92, and the connection portion 92 is connected to the second member 12 via a universal joint 26 and 27 (refer to Fig. 1). The first expansion and contraction portion 31 and the second expansion and contraction portion 32 are provided with connection portions 93 at the end portion of the first housing 40 in which the first screw shaft 41 and the second screw shaft 46 are supported, and the connection portions 93 are connected to the first member 11 via the universal joints 23 and 24 (refer to Fig. 1).

Therefore, when the angle of the second member 12 with respect to the first member 11 is changed, each of the expansion and contraction devices 13B is operated. The driving source 33 is driven to rotate the rotary shaft 51 in the normal direction. The power of the driving source 33 is transmitted to the first expansion and contraction portion 31 via the first power transmission system 34, and the first screw shaft 41 is rotated in the normal direction. In addition, the power of the driving source 33 is transmitted to the second screw shaft 46 of the second expansion and contraction portion 32 via the second power transmission system 35, and the second screw shaft 46 is rotated in the normal direction. When the first screw shaft 41 is rotated in the normal direction, a rotational force is transmitted to the first moving body 42 as an axial movement force via the screw portion 41a and the screw hole 42a, and the first moving body 42 is separated from the first screw shaft 41. In addition, when the second screw shaft 46 is rotated in the normal direction, a rotational force is transmitted to the second moving body 47 as an axial movement force via the screw portion 46a and the screw hole 47a, and the second moving body 47 is separated from the second screw shaft 46.

The expansion and contraction device 13B operates with the first expansion and contraction portion 31 and the second expansion and contraction portion 32 disposed in parallel with each other being synchronized with each other by a common driving source 33. That is, the amount of expansion of the first expansion and contraction portion 31 and the amount of expansion of the second expansion and contraction portion 32 are the same. As a result, the first moving body 42 and the second moving body 47 can be expanded outward in the axial direction with respect to the first housing 40 and the second housing 52 and the angle of the second member 12 with respect to the first member 11 can be changed, as the expansion and contraction device 13B.

Then, for example, the first expansion and contraction portion 31 of the expansion and contraction device 13B occurs the operation abnormality. The first expansion and contraction portion 31 and the second expansion and contraction portion 32 are disposed in parallel between the first member 11 and the second member 12. Therefore, even when the operation abnormality occurs in the first expansion and contraction portion 31, the second expansion and contraction portion 32 operates normally, so that the angle of the second member 12 can be appropriately changed and the second member 12 is prevented from falling.

### [Third Embodiment]

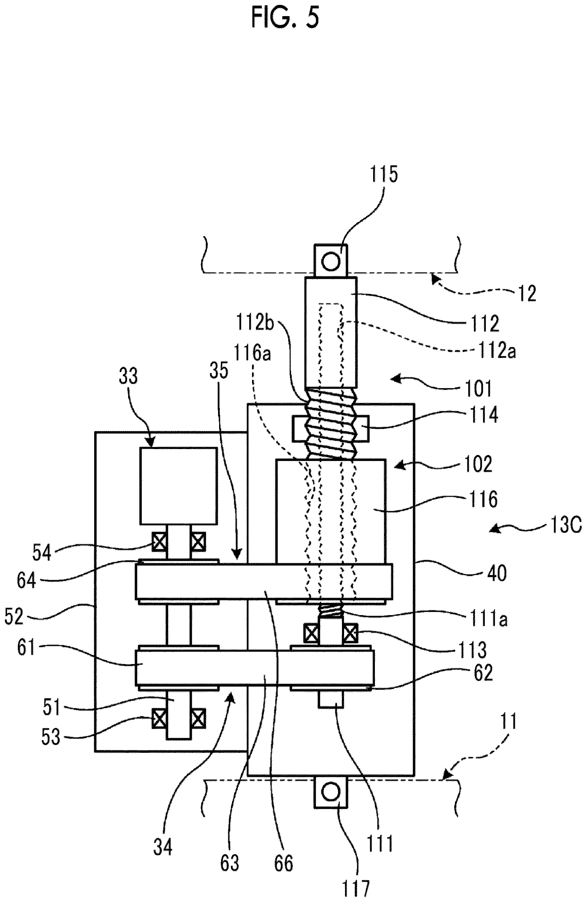

Fig. 5 is a schematic view showing an expansion and contraction device in the oscillation device of a third embodiment. The same reference numerals are assigned to the members having the same functions as the members in the first embodiment described above, and the detailed description thereof will be omitted.

In the third embodiment, as shown in Fig. 5, the expansion and contraction device 13C includes a first expansion and contraction portion 101, a second expansion and contraction portion 102, a driving source 33, a first power transmission system 34, and a second power transmission system 35. The driving source 33, the first power transmission system 34, and the second power transmission system 35 are the same configurations as those in the first embodiment.

The first expansion and contraction portion 101 and the second expansion and contraction portion 102 are capable of expanding and contracting between the first member 11 and the second member 12. The first expansion and contraction portion 101 and the second expansion and contraction portion 102 are disposed in a parallel state between the first member 11 and the second member 12. The first expansion and contraction portion 101 and the second expansion and contraction portion 102 are accommodated in the first housing 40.

The first expansion and contraction portion 101 has a screw shaft 111 and a moving body 112. A screw portion 111a is formed in a tip portion of the screw shaft 111. The screw hole 112a penetrating the base end portion is formed in the moving body 112. The first expansion and contraction portion 101 is configured such that the screw portion 111a of the screw shaft 111 is screwed into the screw hole 112a of the moving body 112.

The screw shaft 111 is rotatable in the circumferential direction by the bearing 113 with respect to the first housing 40 and is supported to be immovable in the axial direction. The moving body 112 is movable in the axial direction by the guide member 114 and is supported not to be rotatable in the circumferential direction. A part of the moving body 112 on the tip portion side protrudes from the first housing 40. The moving body 112 is provided with a connection portion 115 at a tip portion, and the connection portion 115 is connected to the second member 12 via universal joints 26 and 27 (refer to Fig. 1).

The second expansion and contraction portion 102 includes a moving body 112 and a driven pulley 116 as a cylindrical member. Here, the moving body 112 is also used as a component of the first expansion and contraction portion 101 and the second expansion and contraction portion 102. A screw portion 112b is formed in a base end outer peripheral portion of the moving body 112. A screw hole 116a penetrating in the axial direction is formed in the driven pulley 116. The second expansion and contraction portion 102 is configured such that the screw portion 112b of the moving body 112 is screwed into the screw hole 116a of the driven pulley 116. Here, the reduction ratio between the screw portion 111a of the screw shaft 111 constituting the first expansion and contraction portion 101 and the screw hole 112a of the moving body 112 and the reduction ratio between the screw portion 112b of the moving body 112 constituting the second expansion and contraction portion 102 and the screw hole 116a of the driven pulley 116 are the same.

The first expansion and contraction portion 101 and the second expansion and contraction portion 102 are provided with connection portions 117 at the end portion of the first housing 40 in which the screw shaft 111 and the driven pulley 116 are supported, and the connection portions 117 are connected to the first member 11 via the universal joints 23 and 24 (refer to Fig. 1).

Therefore, in the first expansion and contraction portion 101, when the screw shaft 111 is rotated in the normal direction, power is transmitted to the moving body 112 via the screw portion 111a and the screw hole 112a that are screwed to each other, and the moving body 112 moves to one side in the axial direction and is separated from the screw shaft 111. On the other hand, in the first expansion and contraction portion 101, when the screw shaft 111 is rotated in the reverse direction, power is transmitted to the moving body 112 via the screw portion 111a and the screw hole 112a that are screwed to each other, and the moving body 112 moves to the other side in the axial direction and approaches the screw shaft 111.

In the second expansion and contraction portion 102, when the driven pulley 116 is rotated in the normal direction, power is transmitted to the moving body 112 via the screw hole 116a and the screw portion 112b that are screwed to each other, and the moving body 112 moves to one side in the axial direction and is separated from the driven pulley 116. On the other hand, in the second expansion and contraction portion 102, when the driven pulley 116 is rotated in the reverse direction, power is transmitted to the moving body 112 via the screw hole 116a and the screw portion 112b that are screwed to each other, and the moving body 112 moves to the other side in the axial direction and approaches the driven pulley 116.

The driving source 33 has a rotary shaft 51. The driving source 33 is accommodated in and fixed to the second housing 52. The second housing 52 is fixed to the first housing 40. The first power transmission system 34 has a drive pulley 61, a driven pulley 62, and a drive belt 63. The second power transmission system 35 has a drive pulley 64, a driven pulley 116, and a drive belt 66. The drive belt 66 is wound between the drive pulley 64 and the driven pulley 116. The second power transmission system 35 is capable of rotating the driven pulley 116 by transmitting the power of the driving source 33 between the driving source 33 and the driven pulley 116.

Therefore, when the angle of the second member 12 with respect to the first member 11 is changed, each of the expansion and contraction devices 13C is operated. The driving source 33 is driven to rotate the rotary shaft 51 in the normal direction. The power of the driving source 33 is transmitted to the first expansion and contraction portion 101 via the first power transmission system 34, and the screw shaft 111 is rotated in the normal direction. In addition, the power of the driving source 33 is transmitted to the driven pulley 116 of the second expansion and contraction portion 32 via the second power transmission system 35, and the driven pulley 116 is rotated in the normal direction. When the screw shaft 111 is rotated in the normal direction, a rotational force is transmitted to the moving body 112 as an axial movement force via the screw portion 111a and the screw hole 112a, and the moving body 112 is separated from the screw shaft 111. In addition, when the driven pulley 116 is rotated in the normal direction, a rotational force is transmitted to the moving body 112 as an axial movement force via the screw hole 116a and the screw portion 112b, and the moving body 112 is separated from the driven pulley 116.

The expansion and contraction device 13C operates with the first expansion and contraction portion 101 and the second expansion and contraction portion 102 disposed in parallel with each other being synchronized with each other by a common driving source 33. As a result, the moving body 112 can be expanded outward in the axial direction with respect to the first housing 40 and the second housing 52 and the angle of the second member 12 with respect to the first member 11 can be changed, as the expansion and contraction device 13C.

Then, for example, the first expansion and contraction portion 101 of the expansion and contraction device 13C occurs the operation abnormality. The first expansion and contraction portion 101 and the second expansion and contraction portion 102 are disposed in parallel between the first member 11 and the second member 12. Therefore, even when the operation abnormality occurs in the first expansion and contraction portion 101, the second expansion and contraction portion 102 operates normally, so that the angle of the second member 12 can be appropriately changed and the second member 12 is prevented from falling.

### [Fourth Embodiment]

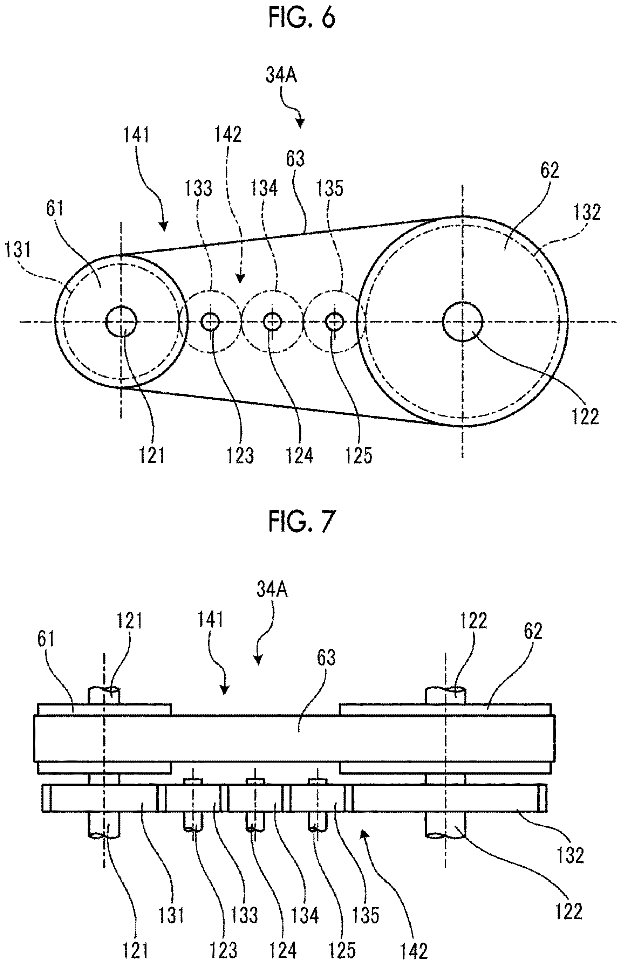

Fig. 6 is a front view showing a main part of the expansion and contraction device in the oscillation device of the fourth embodiment, and Fig. 7 is a plan view showing the main part of the expansion and contraction device. The same reference numerals are assigned to the members having the same functions as the members in the first embodiment described above, and the detailed description thereof will be omitted.

In the fourth embodiment, as shown in Figs. 6 and 7, the first power transmission system 34A is a modification example of the first power transmission system 34 in each of the above-described embodiments. The first power transmission system 34A can also be applied as a modification example of the second power transmission system 35 in each of the above-described embodiments.

The first power transmission system 34B has a first power transmission path 141 and a second power transmission path 142. The first power transmission path 141 and the second power transmission path 142 are power transmission paths of different types, respectively.

The first power transmission path 141 includes a drive pulley 61, a driven pulley 62, and a drive belt 63. The drive pulley 61 is fixed to the rotary shaft 121, and the driven pulley 62 is fixed to the rotary shaft 122. The drive belt 63 is wound between the drive pulley 61 and the driven pulley 62. The first power transmission path 141 is capable of transmitting power of the rotary shaft 121 to rotate the rotary shaft 122.

The second power transmission path 142 includes the drive gear 131, the driven gear 132, and a plurality of (three in the present embodiment) intermediate gears 133, 134, and 135. The drive gear 131 is fixed to the rotary shaft 121, and the driven gear 132 is fixed to the rotary shaft 122. The intermediate gears 133, 134, and 135 are fixed to the rotary shafts 123, 124, and 125. The drive gear 131 and the intermediate gears 133, 134, and 135 and the driven gear 132 mesh with each other. The second power transmission path 142 is capable of transmitting power of the rotary shaft 121 to the rotary shaft 122.

The first power transmission path 141 and the second power transmission path 142 operate in synchronization with each other and rotate the rotary shaft 122 by a rotational force of the rotary shaft 121. Therefore, the second power transmission path 142 is set such that the rotation amount (rotation speed) of the first power transmission path 141 and the second power transmission path 142 transmitted from the rotary shaft 121 to the rotary shaft 122 is the same. For example, the diameter or the number of teeth of the drive gear 131, the driven gear 132, and the intermediate gears 133, 134, and 135 is set.

Therefore, even when an operation abnormality such as the drive belt 63 of the first power transmission path 141 being damaged occurs, the power of the rotary shaft 121 can be transmitted to the rotary shaft 122 by the second power transmission path 142. Similarly, even when the operation abnormality such as the intermediate gears 133, 134, and 135 of the second power transmission path 142 being damaged occurs, the power of the rotary shaft 121 can be transmitted to the rotary shaft 122 by the first power transmission path 141.

### [Effect and Action of Present Embodiment]

An oscillation device according to a first aspect, the oscillation device 10 includes a plurality of expansion and contraction devices 13, 13A, 13B, and 13C disposed between a first member 11 and a second member 12 disposed to face each other, in which the expansion and contraction devices 13, 13A, 13B, and 13C include first expansion and contraction portions 31 and 101 that are capable of expanding and contracting between the first member 11 and the second member 12, second expansion and contraction portions 32 and 102 that are capable of expanding and contracting between the first member 11 and the second member 12, and a common driving source 33 that supplies power to the first expansion and contraction portions 31 and 101 and the second expansion and contraction portions 32 and 102.

According to the oscillation device of the first aspect, the first expansion and contraction portions 31 and 101 and the second expansion and contraction portions 32 and 102 that are driven by the common driving source 33 are provided. Therefore, each of the expansion and contraction devices 13, 13A, 13B, and 13C disposed between the first member 11 and the second member 12 has redundancy. Therefore, even when an operation abnormality occurs in one of the first expansion and contraction portions 31 and 101 and the second expansion and contraction portions 32 and 102, the other can operate normally, so that it is possible to suppress the falling and improve safety. In addition, since the first expansion and contraction portions 31 and 101 and the second expansion and contraction portions 32 and 102 are driven by the common driving source 33, it is possible to suppress an increase in size and an increase in cost.

In the oscillation device according to a second aspect, the first expansion and contraction portion 31 and the second expansion and contraction portion 32 are disposed in series between the first member 11 and the second member 12. Accordingly, the first expansion and contraction portion 31 and the second expansion and contraction portion 32 are disposed in series with each other, so that a large space in the lateral direction can be secured in the first expansion and contraction portion 31 and the second expansion and contraction portion 32, and the lateral compactification of the expansion and contraction devices 13, 13A, 13B, and 13C can be achieved.

In the oscillation device according to a third aspect, the first expansion and contraction portions 31 and 101 and the second expansion and contraction portions 32 and 102 are disposed in parallel between the first member 11 and the second member 12. Accordingly, the first expansion and contraction portion 31 and the second expansion and contraction portion 32 are disposed in parallel with each other, so that the length of the first expansion and contraction portion 31 and the second expansion and contraction portion 32 in the vertical direction can be shortened, and the vertical compactification of the expansion and contraction devices 13, 13A, 13B, and 13C can be achieved.

The oscillation device according to a fourth aspect is the oscillation device in which the first expansion and contraction portion 31 has a first screw shaft 41 and a first moving body 42 that is screwed to a screw portion 41a of the first screw shaft 41 and is movable in an axial direction, the second expansion and contraction portion 32 has a second screw shaft 46 and a second moving body 47 that is screwed to a screw portion 46a of the second screw shaft 46 and is movable in the axial direction, a first power transmission system 34 that transmits power of the driving source 33 to the first screw shaft 41 to rotate the first screw shaft 41 is provided between the driving source 33 and the first screw shaft 41, and a second power transmission system 35 that transmits power of the driving source 33 to the second screw shaft 46 to rotate the second screw shaft 46 is provided between the driving source 33 and the second screw shaft 46. Accordingly, the power of the driving source 33 can be appropriately transmitted to the first expansion and contraction portion 31 and the second expansion and contraction portion 32 by the first power transmission system 34 and the second power transmission system 35.

In the oscillation device according to a fifth aspect, the first screw shaft 41 and the second screw shaft 46 are disposed in a straight line, and a common guide shaft 81 is disposed in the first screw shaft 41 and the second screw shaft 46. Accordingly, even when the first screw shaft 41 or the second screw shaft 46 is broken, the first expansion and contraction portion 31 and the second expansion and contraction portion 32 are maintained in a series relationship by the guide shaft 81, and thus it is possible to appropriately prevent the falling.

In the oscillation device according to a sixth aspect, a base end portion side of the first screw shaft 41 and the second screw shaft 46 is connected to one of the first member 11 and the second member 12, and a tip portion of the first moving body 42 and the second moving body 47 is connected to the connecting member 91 and is connected to the other of the first member 11 and the second member 12 via the connecting member 91. Accordingly, the first expansion and contraction portion 31 and the second expansion and contraction portion 32 can be disposed in parallel with each other, and even when one of the first screw shaft 41 and the second screw shaft 46 is broken, the other can secure the amount of expansion and contraction, and thus it is possible to appropriately prevent the falling.

The oscillation device according to a seventh aspect is the oscillation device in which the first expansion and contraction portion 101 has a screw shaft 111 and a moving body 112 that is screwed to a screw portion 11a of the screw shaft 111 and is movable in an axial direction, the second expansion and contraction portion 102 has a moving body 112 and a driven pulley (cylindrical member) 116 that is screwed to a screw portion 112b of the moving body 112 and is movable in the axial direction, a first power transmission system 34 that transmits power of the driving source 33 to the screw shaft 111 to rotate the screw shaft 111 is provided between the driving source 33 and the screw shaft 111, and a second power transmission system 35 that transmits power of the driving source 33 to the driven pulley 116 to rotate the driven pulley 116 is provided between the driving source 33 and the driven pulley 116. Accordingly, the first expansion and contraction portion 101 and the second expansion and contraction portion 102 are also being used as the configuration member and are disposed in parallel, so that the size thereof can be reduced, and even when one of the screw shaft 111 and the driven pulley 116 is broken, the other can secure the amount of expansion and contraction, and thus it is possible to appropriately prevent the falling.

In the oscillation device according to an eighth aspect, the first power transmission systems 34 and 34A and the second power transmission system 35 are provided with power transmission paths of different types, respectively. Accordingly, redundancy can be secured in the first power transmission systems 34 and 34A and the second power transmission system 35, and safety can be improved.

The oscillation device according to a ninth aspect includes an operation abnormality detection unit 72 that detects an operation abnormality of the first expansion and contraction portions 31 and 101 and the second expansion and contraction portions 32 and 102, and control unit 71 that controls the driving source 33 based on a detection result of the operation abnormality detection unit 72, in which, when the operation abnormality detection unit 72 detects the operation abnormality of any one of the first expansion and contraction portions 31 and 101 and the second expansion and contraction portions 32 and 102, the control unit 71 controls an amount of expansion and contraction of any other of the first expansion and contraction portions 31 and 101 and the second expansion and contraction portions 32 and 102 by the driving source 33. Accordingly, even when an operation abnormality occurs in one of the first expansion and contraction portions 31 and 101 and the second expansion and contraction portions 32 and 102, the other can operate normally, so that it is possible to suppress the falling and improve safety.

A method for controlling an oscillation device according to a tenth aspect, in which a plurality of expansion and contraction devices 13, 13A, 13B, and 13C are disposed between a first member 11 and a second member 12 disposed to face each other, the expansion and contraction devices 13, 13A, 13B, and 13C include first expansion and contraction portions 31 and 101 that are capable of expanding and contracting between the first member 11 and the second member 12, second expansion and contraction portions 32 and 102 that are capable of expanding and contracting between the first member 11 and the second member 12, and a common driving source 33 that supplies power to the first expansion and contraction portions 31 and 101 and the second expansion and contraction portions 32 and 102, the method includes, when an operation abnormality occurs in any one of the first expansion and contraction portions 31 and 101 and the second expansion and contraction portions 32 and 102, controlling an amount of expansion and contraction of any other of the first expansion and contraction portions 31 and 101 and the second expansion and contraction portions 32 and 102 by the driving source 33.

According to the method for controlling the oscillation device according to the tenth aspect, even when an operation abnormality occurs in one of the first expansion and contraction portions 31 and 101 and the second expansion and contraction portions 32 and 102, the other can operate normally, so that it is possible to suppress the falling and improve safety. In addition, since the first expansion and contraction portions 31 and 101 and the second expansion and contraction portions 32 and 102 are driven by the common driving source 33, it is possible to suppress an increase in size and an increase in cost.

In the above-described embodiment, the first power transmission system 34 and the second power transmission system 35 are configured by the pulley and the drive belt. However, the present disclosure is not limited to this configuration. The first power transmission system 34 and the second power transmission system 35 may be configured by, for example, a gear mechanism.

### Reference Signs List

10: Oscillation device
11: First member
12: Second member
13, 13A, 13B, 13C: Expansion and contraction device
31, 101: First expansion and contraction portion
32, 102: Second expansion and contraction portion
33: Driving source
34, 34A: First power transmission system
35: Second power transmission system
40: First housing
41: First screw shaft
42: First moving body
46: Second screw shaft
47: Second moving body
51: Rotary shaft
52: Second housing
61, 64: Drive pulley
62, 65: Driven pulley
63, 66: Drive belt
71: Control unit
72: Operation abnormality detection unit
81: Guide shaft
91: Connecting member
111: Screw shaft
112: Moving body
116: Driven pulley (cylindrical member)
131: Drive gear
132: Driven gear
133, 134, 135: Intermediate gear
141: First power transmission path
142: Second power transmission path

## Claims

1. An oscillation device comprising:
a plurality of expansion and contraction devices disposed between a first member and a second member disposed to face each other, wherein
the expansion and contraction device includes
a first expansion and contraction portion that is capable of expanding and contracting between the first member and the second member,
a second expansion and contraction portion that is capable of expanding and contracting between the first member and the second member, and
a common driving source that supplies power to the first expansion and contraction portion and the second expansion and contraction portion.

2. The oscillation device according to Claim 1, wherein
the first expansion and contraction portion and the second expansion and contraction portion are disposed in series between the first member and the second member.

3. The oscillation device according to Claim 1, wherein
the first expansion and contraction portion and the second expansion and contraction portion are disposed in parallel between the first member and the second member.

4. The oscillation device according to any one of Claims 1 to 3, wherein
the first expansion and contraction portion has a first screw shaft and a first moving body that is screwed to a screw portion of the first screw shaft and is movable in an axial direction, the second expansion and contraction portion has a second screw shaft and a second moving body that is screwed to a screw portion of the second screw shaft and is movable in the axial direction, a first power transmission system that transmits power of the driving source to the first screw shaft to rotate the first screw shaft is provided between the driving source and the first screw shaft, and a second power transmission system that transmits power of the driving source to the second screw shaft to rotate the second screw shaft is provided between the driving source and the second screw shaft.

5. The oscillation device according to Claim 4, wherein
the first screw shaft and the second screw shaft are disposed in a straight line, and a common guide shaft is disposed in the first screw shaft and the second screw shaft.

6. The oscillation device according to Claim 4, wherein
a base end portion side of the first screw shaft and the second screw shaft is connected to one of the first member and the second member, and a tip portion of the first moving body and the second moving body is connected to a connecting member and is connected to the other of the first member and the second member via the connecting member.

7. The oscillation device according to Claim 1, wherein
the first expansion and contraction portion has a screw shaft and a moving body that is screwed to a screw portion of the screw shaft and is movable in an axial direction, the second expansion and contraction portion has the moving body and a cylindrical member that is screwed to a screw portion of an outer periphery of the moving body and is movable in the axial direction, a first power transmission system that transmits power of the driving source to the screw shaft to rotate the screw shaft is provided between the driving source and the screw shaft, and a second power transmission system that transmits power of the driving source to the cylindrical member to rotate the cylindrical member is provided between the driving source and the cylindrical member.

8. The oscillation device according to Claim 4 or 7, wherein
different types of power transmission paths are provided in each of the first power transmission system and the second power transmission system.

9. The oscillation device according to any one of Claims 1 to 8, further comprising:
an operation abnormality detection unit that detects an operation abnormality of the first expansion and contraction portion and the second expansion and contraction portion; and
a control unit that controls the driving source based on a detection result of the operation abnormality detection unit, wherein
when the operation abnormality detection unit detects the operation abnormality of any one of the first expansion and contraction portion and the second expansion and contraction portion, the control unit controls an amount of expansion and contraction of the other of the first expansion and contraction portion and the second expansion and contraction portion by the driving source.

10. A control method for an oscillation device in which a plurality of expansion and contraction devices are disposed between a first member and a second member disposed to face each other, the expansion and contraction device includes a first expansion and contraction portion that is capable of expanding and contracting between the first member and the second member, a second expansion and contraction portion that is capable of expanding and contracting between the first member and the second member, and a common driving source that supplies power to the first expansion and contraction portion and the second expansion and contraction portion, the method comprising:
when an operation abnormality occurs in any one of the first expansion and contraction portion and the second expansion and contraction portion, controlling an amount of expansion and contraction of the other of the first expansion and contraction portion and the second expansion and contraction portion by the driving source.
